(19) Europäisches Patentamt
European Patent Office
Office européen des brevets

(11) **EP 3 369 168 B1**

(12) **FASCICULE DE BREVET EUROPEEN**

(45) Date de publication et mention de la délivrance du brevet:
**17.11.2021 Bulletin 2021/46**

(21) Numéro de dépôt: **16806225.5**

(22) Date de dépôt: **25.10.2016**

(51) Int Cl.:
**H02P 6/08** (2016.01)

(86) Numéro de dépôt international:
**PCT/FR2016/052774**

(87) Numéro de publication internationale:
**WO 2017/072440 (04.05.2017 Gazette 2017/18)**

(54) **PROCEDE ET DISPOSITIF DE COMMANDE D'UNE MACHINE ELECTRIQUE TOURNANTE SYNCHRONE POLYPHASEE A EXCITATION, ET ALTERNO-DEMARREUR DE VEHICULE AUTOMOBILE CORRESPONDANT**

VERFAHREN UND VORRICHTUNG ZUR STEUERUNG EINER ANGEREGTEN MEHRPHASIGEN ELEKTRISCHEN DREHSYNCHRONMASCHINE UND ENTSPRECHENDER STARTER-GENERATOR EINES KRAFTFAHRZEUGS

METHOD AND DEVICE FOR CONTROLLING AN EXCITED POLYPHASE ELECTRICAL SYNCHRONOUS ROTARY MACHINE, AND CORRESPONDING MOTOR VEHICLE STARTER-ALTERNATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2015 FR 1560181**

(43) Date de publication de la demande:
**05.09.2018 Bulletin 2018/36**

(73) Titulaire: **Valeo Equipements Electriques Moteur 94046 Créteil Cedex (FR)**

(72) Inventeur: **KOBYLANSKI, Luc 94046 Créteil Cedex (FR)**

(74) Mandataire: **Valeo Powertrain Systems Service Propriété Intellectuelle 14, avenue des Béguines 95800 Cergy St Christophe (FR)**

(56) Documents cités:
**EP-A1- 2 128 427        EP-A1- 2 219 288**
**WO-A2-2006/097789    US-A1- 2010 207 568**
**US-A1- 2012 298 062**

**Description**

**DOMAINE TECHNIQUE DE L'INVENTION.**

La présente invention concerne un procédé et un dispositif de commande d'une machine électrique tournante synchrone polyphasée à excitation.

L'invention concerne aussi un alterno-démarreur de véhicule automobile comportant un tel dispositif.

**ARRIERE PLAN TECHNOLOGIQUE DE L'INVENTION.**

Des considérations d'économie d'énergie et de réduction de la pollution, surtout en milieu urbain, conduisent les constructeurs de véhicules automobiles à équiper leurs modèles d'un système de démarrage/ arrêt automatique, tel que le système connu sous le terme anglo-saxon de « Stop and Go ».

Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de l'alterno-démarreur, comme suite à la détection par le système de l'enfoncement de la pédale d'embrayage par le conducteur, ou de toute autre action traduisant la volonté du conducteur de redémarrer son véhicule.

Un alternateur triphasé apte à fonctionner en démarreur, c'est-à-dire en moteur électrique, est décrit par la société VALEO ELECTRONIQUE dans la demande de brevet français FR2745445.

Un pont redresseur en sortie de l'induit de l'alternateur sert également de pont de commande des phases du moteur électrique, des transistors de puissance des bras du pont étant commandés par des séquences de signaux carrés délivrés par une unité de commande.

Une telle commande pleine onde de type "tout ou rien" est bien connue de l'homme de métier et est très simple à mettre en œuvre.

Dans les alterno-démarreurs les plus récents, une machine électrique tournante synchrone polyphasée est raccordée à un convertisseur courant continu - courant alternatif - ou onduleur - réversible alimenté par la batterie de bord en mode moteur et par la machine électrique en mode générateur.

Le développement des techniques numériques permet de piloter l'onduleur en modulation de largeur d'impulsion, couramment appelée MLI ou encore PWM (en anglais "Pulse Width Modulation") pour obtenir un contrôle précis de la machine électrique dans chaque condition particulière de fonctionnement.

Des exemples de commandes MLI générées par un microprocesseur exécutant des programmes sont décrites dans la demande de brevet français FR2895597 au nom de la société VALEO EQUIPEMENTS ELECTRIQUES MOTEURS.

Toutefois, l'entité inventive a été confrontée au problème d'une limitation en fréquence de la commutation des onduleurs sur des machines électriques à grand nombre de pôles par phase qui tournent vite.

En effet, le traitement logiciel qui aboutit à l'élaboration des rapports cycliques des commandes MLI nécessite une fréquence de signal des signaux MLI bien supérieure à une fréquence électrique correspondant à la vitesse de rotation de la machine (typiquement supérieure d'un ordre de grandeur).

Du fait de la limitation en fréquence de la commutation des onduleurs, il est difficile de respecter ces ratios, si un nombre de paires de pôles par phase est élevé (Une pulsation électrique est égale à la vitesse de rotation multipliée par le nombre de paires de pôles par phase).

Une solution habituellement adoptée dans ces circonstances est de commander les phases de façon classique en pleine onde, c'est-à-dire en générant une forme d'onde carrée à une fréquence électrique de la machine, à partir d'une vitesse de rotation nominale prédéterminée. Une telle solution est par exemple connue du document WO 2006/097789 A2.

Le document US2010207568 A1 divulgue un procédé de commande d'une machine électrique tournante comprenant un premier élément apte à générer un champ magnétique tournant par rapport au premier élément et un second élément pourvu d'un enroulement apte à être parcouru par un courant de manière à ce que le champ magnétique tournant entraine le second élément en rotation, comprenant une étape de mesure d'une grandeur électrique au moins liée audit courant et une étape de génération du champ magnétique tournant à partir d'un instant déterminé en fonction de la grandeur électrique mesurée.

Par ailleurs, la mise en œuvre de la machine requiert un mode de fonctionnement dans lequel la machine n'est pas pilotée de façon active, et n'interagit plus avec le réseau électrique. Un tel mode est en particulier requis en tant que mode de repli en cas de défaut. Ce mode peut également être utilisé en l'absence de défaut, dans des situations où la machine ne doit pas fournir ou prélever de puissance électrique.

L'utilisation d'une machine à excitation bobinée permet de réaliser ce mode en annulant le courant d'excitation et en ouvrant les interrupteurs de pilotage, de façon à isoler les phases de la machine du réseau de bord. Une autre réalisation d'un tel mode consiste à annuler le courant d'excitation et à fermer certains interrupteurs de pilotage de façon à court-circuiter les phases de la machine.

Une telle machine est par exemple décrite dans le document US2012298062 qui divulgue un dispositif de commande d'un système micro-hybride comportant une machine électrique tournante réversible pouvant être reliée à un moteur thermique d'un véhicule automobile, et un module de commande.

Toutefois, il a été constaté par l'entité inventive qu'une transition brusque entre ce mode passif et une commande pleine onde produisait un pic de courant important.

## DESCRIPTION GENERALE DE L'INVENTION.

La présente invention vise donc à limiter ce pic de courant.

Elle a précisément pour objet un procédé de commande d'une machine électrique tournante synchrone polyphasée à excitation du type de ceux comprenant une étape de commande dans laquelle on pilote en mode pleine onde des courants des phases dans des enroulements de phases d'un stator de la machine.

Cette machine est reliée à un réseau électrique de bord alimenté par une batterie sous une tension nominale prédéterminée pour un fonctionnement en moteur de la machine.

Dans le procédé selon l'invention, cette étape de commande en mode pleine onde est précédée d'une étape de pré-magnétisation du stator en circuit ouvert dans laquelle une force électromotrice de crête entre phases sensiblement égale à la tension nominale est créée par un courant d'excitation rotorique d'un rotor de la machine.

Selon l'invention, cette étape de pré-magnétisation comprend une détermination d'une valeur de référence du courant d'excitation rotorique en fonction d'une pulsation électrique de la machine

Dans le procédé selon l'invention, les courants de phases étant commandés par un onduleur comprenant, dans un mode de réalisation particulier, des bras formés, d'une part, par des premiers commutateurs de puissance contrôlés par des circuits de contrôle alimentés par des capacités de déclenchement de commutation dites capacités de «bootstrap» et reliant les enroulements de phases à une borne positive du réseau électrique de bord, et d'autre part, par des seconds commutateurs de puissance reliant les enroulements de phases à une borne de masse de ce réseau électrique, l'étape de pré-magnétisation comprend en outre une séquence de charge de ces capacités de «bootstrap».

On entend par capacité de « bootstrap » une capacité d'alimentation passive flottante portée au potentiel de la phase.

Selon l'invention, pendant cette séquence, on pilote les seconds commutateurs de puissance en fonction d'une position électrique du rotor de façon que seule l'une des phases de la machine présentant une force électromotrice entre phases la plus basse soit commutée à la borne de masse.

Selon l'invention encore, on passe de l'étape de pré-magnétisation à l'étape de commande en pleine onde lorsque le courant d'excitation rotorique a atteint la valeur de référence et que les capacités de «bootstrap» sont chargées.

Dans le procédé de commande d'une machine électrique tournante synchrone polyphasée à excitation selon l'invention, le courant d'excitation rotorique étant commandé par un élément de commutation contrôlé par un circuit de commande alimenté par un condensateur de «bootstrap», on charge ce condensateur de «bootstrap» avant l'étape de pré-magnétisation.

L'invention concerne également un dispositif de commande d'une machine électrique tournante synchrone polyphasée à excitation apte à la mise en œuvre du procédé décrit précédemment, du type de ceux comportant une unité électronique de contrôle pilotant:

- un onduleur relié à un réseau électrique de bord alimenté par une batterie et destiné à être connecté à des enroulements de phases d'un stator de cette machine;
- un circuit de commande relié au réseau électrique de bord et destiné à être connecté à un enroulement d'excitation d'un rotor de la machine.

Selon l'invention, cette unité électronique de contrôle comprend:

- des moyens d'acquisition d'une vitesse de rotation de la machine;
- un premier périphérique de génération de premiers signaux pilotant l'onduleur;
- des moyens de comparaison de la vitesse de rotation à une vitesse de rotation nominale prédéterminée;
- un second périphérique de génération d'un second signal pilotant le circuit de commande;
- une unité centrale de traitement.

Cette unité de traitement exécute:

- un premier sous-programme ou un deuxième sous-programme pour générer au moyen du premier périphérique les premiers signaux de manière à produire respectivement des premières tensions de phases modulées en largeur d'impulsion ou des secondes tensions de phases pleine onde en fonction d'un état des moyens de comparaison;
- préalablement au deuxième sous-programme, un troisième sous-programme de détermination d'un courant d'excitation rotorique en fonction de la vitesse de rotation et de génération au moyen du second périphérique du second signal de manière à produire un flux magnétique de pré-magnétisation dans le stator, et un quatrième sous-programme de génération au moyen du premier périphérique des premiers signaux de manière à maintenir le stator en circuit ouvert;

à partir des moyens de mémorisation de ces premier, deuxième, troisième et quatrième sous-programmes.

Dans un mode particulier de réalisation du dispositif selon l'invention, l'onduleur comprend des bras formés par:

- des premiers commutateurs de puissance contrôlés par des circuits de contrôle alimentés par des capacités de «bootstrap» et reliant les enroulements de phases à une borne positive du réseau électrique;

- des seconds commutateurs de puissance reliant les enroulements de phases à une borne de masse du réseau électrique;

et le quatrième sous-programme effectue en outre une charge de ces capacités de «bootstrap».

Dans un autre mode particulier de réalisation du dispositif selon l'invention, le circuit de commande est alimenté par un condensateur de «bootstrap», et le troisième sous-programme effectue en outre une charge de ce condensateur de «bootstrap».

On tirera bénéfice d'un alterno-démarreur de véhicule automobile qui comprendra selon l'invention un dispositif de commande présentant les caractéristiques ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS.**

La **Figure 1** est un schéma électrique simplifié d'une machine électrique tournante synchrone polyphasée à excitation d'un type concerné par l'invention.

La **Figure 2** est un schéma électrique simplifié d'une machine électrique tournante synchrone triphasée commandée par un dispositif de commande selon l'invention.

La **Figure 3** est un schéma de principe d'un mode de réalisation d'un onduleur alimentant la machine électrique tournante synchrone triphasée montrée sur la **Figure 2,** comportant des capacités de «bootstrap».

La **Figure 4** montre des diagrammes de temps de tensions de phases, de tensions de charge aux bornes des capacités de «bootstrap», et de premiers signaux pilotant l'onduleur montré sur la **Figure 3.**

Les **Figures 5a et 5b** montrent en fonction d'un angle électrique respectivement les forces électromotrices entre phases de la machine électrique tournante synchrone triphasée montrée sur la **Figure 2** et des premiers signaux pilotant l'onduleur montré sur la **Figure 3** dans l'étape de pré-magnétisation du procédé de commande selon l'invention.

La **Figure 6** est un schéma électrique simplifié d'une machine électrique tournante synchrone double triphasée commandée par un autre dispositif de commande selon l'invention au moyen d'un double onduleur.

Les **Figures 7a et 7b** montrent en fonction d'un angle électrique respectivement les forces électromotrices entre phases de la machine électrique tournante synchrone triphasée montrée sur la **Figure 6** et des premiers signaux pilotant le double onduleur dans l'étape de pré-magnétisation du procédé de commande selon l'invention.

**DESCRIPTION DES MODES DE REALISATION PREFERES DE L'INVENTION.**

Les modes de réalisation préférés de l'invention correspondent à un onduleur alimentant une machine électrique tournante polyphasée à excitation 1 à partir d'une batterie 2.

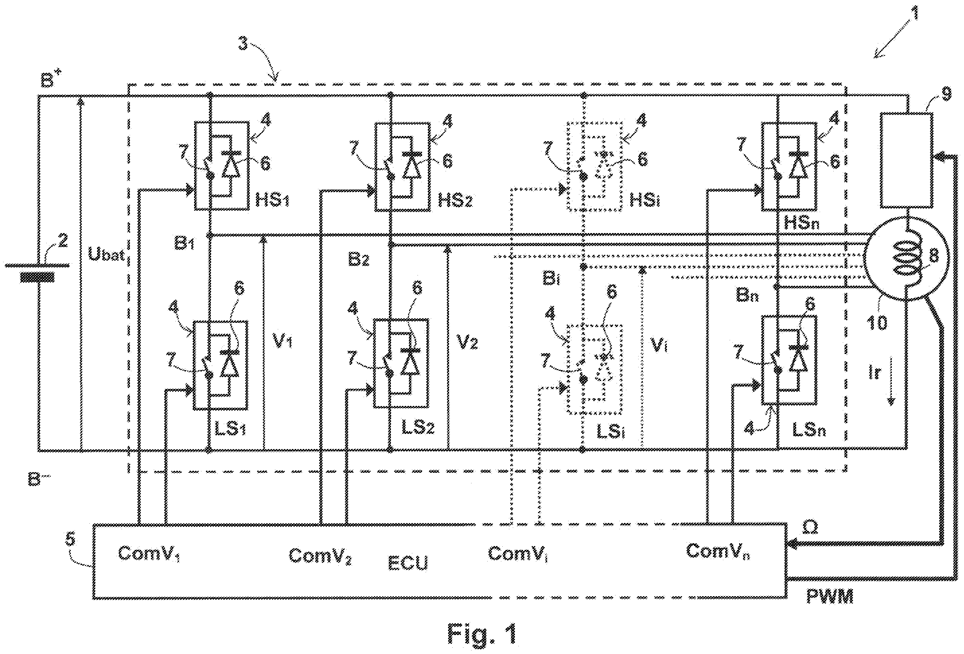

Il s'agit en général d'une machine 1 présentant un nombre n d'enroulements de phases connectés aux points milieux des bras $B_1$, $B_2$, $B_i$, $B_n$ d'un pont de puissance 3 à semi-conducteurs tel que représenté sur la **Figure 1.**

Selon un agencement connu, le pont de puissance 3 présente des bras $B_1$, $B_2$, $B_i$, $B_n$ comprenant chacun des commutateurs à semi-conducteur pilotables 4 reliant, d'une part, les enroulements de phases au pôle positif $B^+$ de la batterie 2 (commutateurs à semi-conducteur supérieurs $HS_1$, $HS_2$, $HS_i$, $HS_n$ du côté "high-side"), et, d'autre part, au pôle négatif $B^-$ de la batterie 2 (commutateurs à semi-conducteur inférieurs $LS_1$, $LS_2$, $LS_i$, $LS_n$ du côté "low-side"),

Une unité électronique de contrôle 5 (ou ECU, acronyme de "Electronic Control Unit" en terminologie anglaise) ferme et ouvre alternativement les commutateurs "high-side" et "low-side" 4 au moyen de signaux de commande $ComV_1$, $ComV_2$, $ComV_i$, $ComV_n$, selon un mode de fonctionnement bien connu d'un onduleur 3, afin de contrôler des tensions de phases $V_1$, $V_2$, $V_i$, $V_n$.

Les commutateurs à semi-conducteur 4 utilisés sont de préférence des transistors de puissance de type MOSFET, dont la diode intrinsèque 6 assure la caractéristique d'être bidirectionnel en courant.

Alternativement, les commutateurs à semi-conducteur 4 sont constitués d'un élément de commutation 7 tel qu'un transistor de puissance bipolaire 7 et d'une diode de roue libre 6.

Il s'agit ici d'une machine à excitation 1, c'est-à-dire dont le rotor 8 comporte un enroulement d'excitation parcouru par un courant d'excitation rotorique Ir réglé également par l'unité électronique de contrôle 5 au moyen d'un circuit de commande 9 en fonction d'une vitesse de rotation Ω et d'un couple demandé.

Ainsi que cela a été indiqué en préambule, du fait de la limitation d'une fréquence de commutation des commutateurs à semi-conducteurs 4, il est nécessaire de passer d'un mode de pilotage en MLI de l'onduleur 3 à un mode de pilotage pleine onde à partir d'une vitesse de rotation nominale comprise entre 4500 et 5000 tr/ mn, selon le type de machine 1.

Ce passage peut créer un pic de courant de plusieurs centaines d'ampères dans le stator 10 sans la mise en œuvre du procédé de commande selon l'invention.

Afin de pallier cet inconvénient, le principe général de l'invention consiste donc à créer une pré-magnétisation du stator 10 en circuit ouvert par un courant d'excitation rotorique Ir avant le passage en pleine onde de manière qu'une force électromotrice de crête entre phases soit sensiblement égale à une tension d'alimentation Ubat de l'onduleur 3.

Une valeur de référence à laquelle est asservie le courant d'excitation rotorique Ir dans cette étape de pré-magnétisation est fonction d'une pulsation électrique de la machine 1 et est donnée par la relation:

$$\dot{i}_{r,PreMag} = \frac{1}{K_e} \cdot \left( \frac{V_{DC}}{K.\omega_E} - \phi_0 \right)$$

où:

$\omega_E$ est la pulsation électrique égale à la vitesse de rotation $\Omega$ de la machine 1 multipliée par un nombre de paires de pôles prédéterminé de la machine 1;
$K_e$ est une inductance mutuelle entre le rotor 8 et le stator 10;
$\Phi_0$ est un flux magnétique rémanent;
$V_{DC}$ est la tension nominale du réseau électrique de bord, c'est-à-dire la tension d'alimentation Ubat;

et K vaut $\sqrt{2}/\pi$.

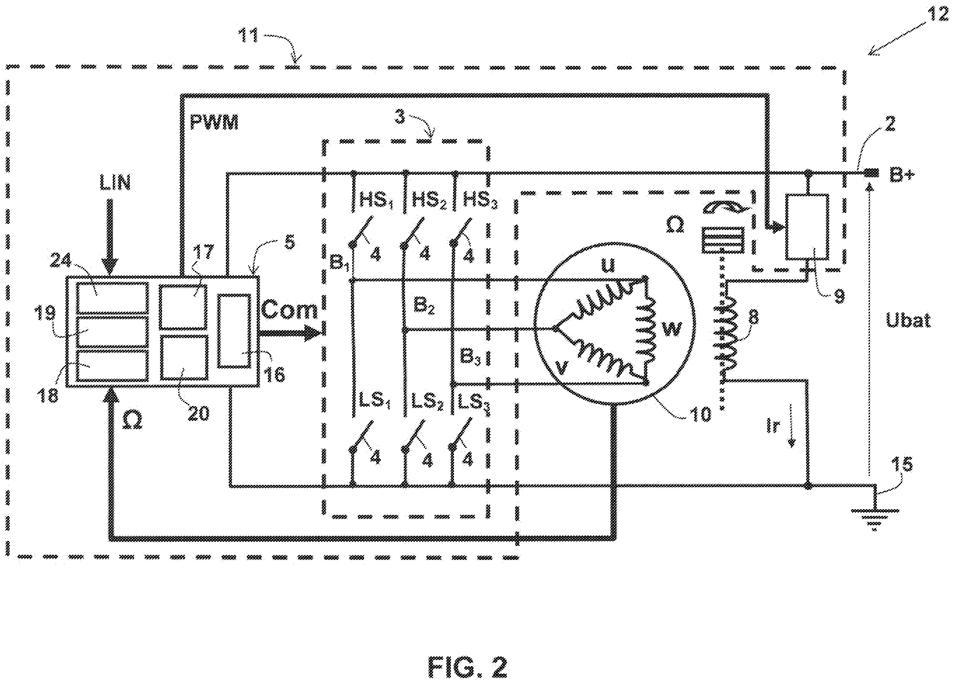

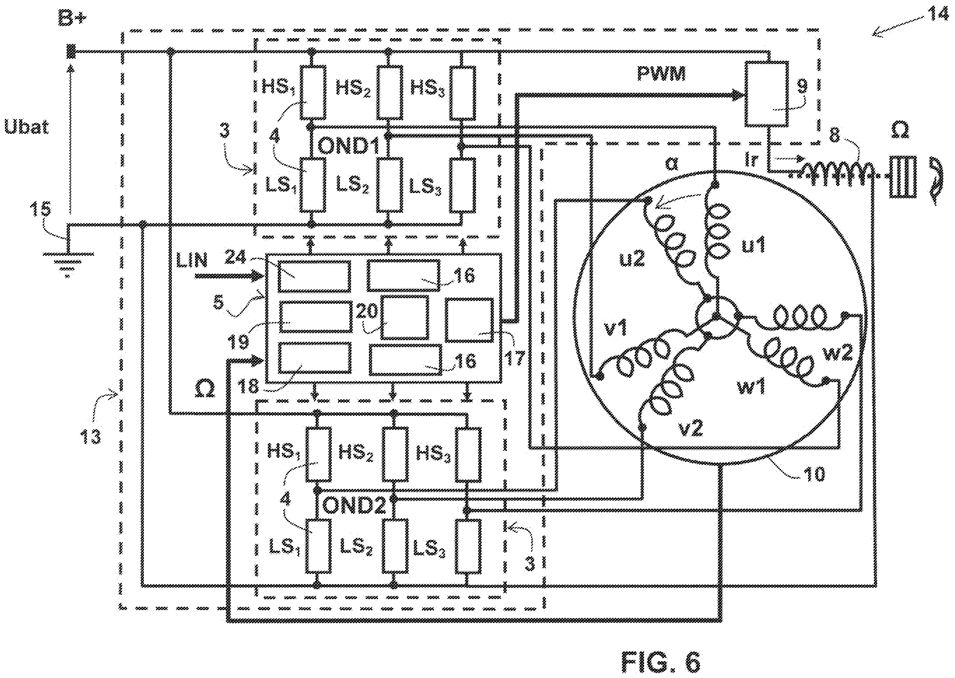

Le procédé selon l'invention sera maintenant expliqué en détail en liaison, à titre d'exemple, avec le dispositif de commande 11 de la machine électrique tournante triphasée à excitation 12 montrée sur la **Figure 2,** ou avec l'autre dispositif de commande 13 de la machine électrique tournante double triphasée à excitation 14 montrée sur la **Figure 6.**

Dans la machine triphasée 12 représentée sur la **Figure 2,** l'onduleur 3 alimente à partir du réseau électrique de bord 2 les trois enroulements de phases u, v, w du stator 10.

Cet onduleur 3 comprend trois bras $B_1$, $B_2$, $B_3$ formés par des premiers commutateurs de puissance $HS_1$, $HS_2$, $HS_3$ reliant ces enroulements de phases u, v, w à une borne positive B+ du réseau électrique 2, et des seconds commutateurs de puissance $LS_1$, $LS_2$; $LS_3$ reliant les enroulements de phases u, v, w à une borne de masse 15.

L'unité électronique de contrôle 5 génère les premiers signaux Com pilotant l'onduleur 3 au moyen d'un premier périphérique 16, et un second signal PWM de pilotage du circuit de commande 9 du courant d'excitation rotorique Ir circulant dans l'enroulement d'excitation 8 du rotor au moyen d'un second périphérique 17.

L'unité électronique de contrôle 5 comprend également des moyens d'acquisition 18 de la vitesse de rotation $\Omega$ et de comparaison à la vitesse de rotation nominale.

Un premier sous-programme ou un deuxième sous-programme, stockés dans des moyens de mémorisations 19, est exécuté par une unité centrale de traitement 20 pour générer au moyen du premier périphérique 16 les premiers signaux Com de manière à produire respectivement des premières tensions de phases U, V, W modulées en largeur d'impulsion ou des secondes tensions de phases U, V, W pleine onde en fonction d'un état des moyens de comparaison.

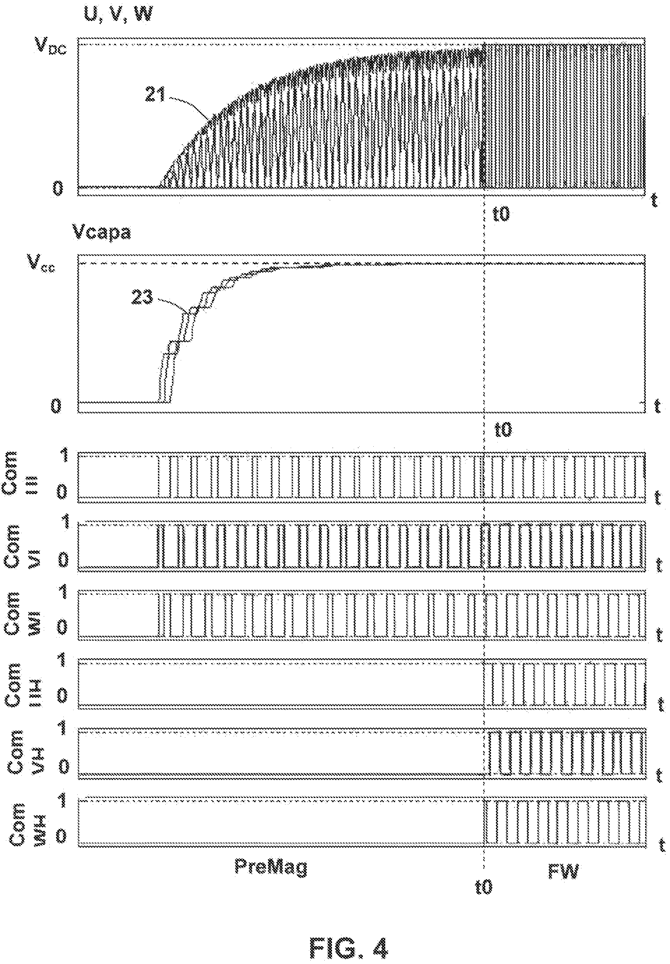

Comme le montrent bien les diagrammes de temps des premiers signaux ComUL, ComVL, ComWL; ComUH, ComVH, ComWH de la **Figure 4,** le mode de pilotage en pleine onde FW des tensions de phases U, V, W pour t > t0, quand la vitesse de rotation $\Omega$ est supérieure à la vitesse de rotation nominale, est précédé d'un mode de fonctionnement PreMag où le stator 10 est non alimenté en laissant toujours ouverts les premiers commutateurs de puissance $HS_1$, $HS_2$, $HS_3$ (ComUH, ComVH, ComWH au niveau zéro en permanence).

Dans ce mode de fonctionnement PreMag, un troisième sous-programme stocké dans les moyens de mémorisation 19, et exécuté par l'unité centrale de traitement 20, détermine la valeur de référence du courant d'excitation rotorique Ir et génère au moyen du second périphérique 17 le second signal PWM permettant de créer un flux magnétique de pré-magnétisation dans le stator 10.

Il en résulte que les tensions de phases U, V, W (c'est-à-dire les forces électromotices entre phases FEM, le stator 10 étant en circuit ouvert) croissent lentement 21 en valeur efficace pour atteindre la tension nominale $V_{DC}$ comme le montre bien la **Figure 4.**

Dans le cas où le circuit de commande 9 est flottant, et alimenté par un condensateur de «bootstrap», le troisième sous-programme en effectue la charge.

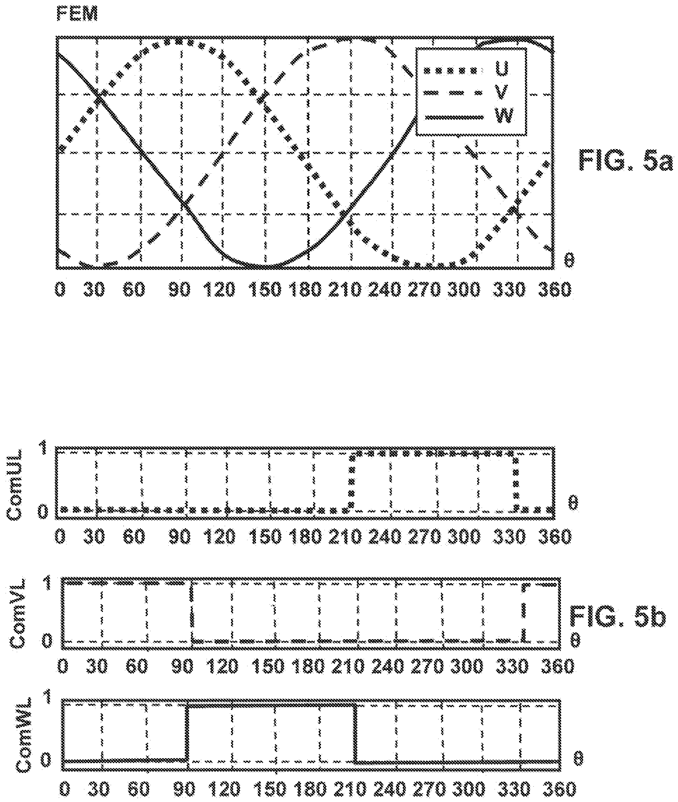

Cette pré-magnétisation est effectuée en exécutant un quatrième sous-programme, stocké dans les moyens de mémorisation 19, qui génère des premiers signaux ComUL, ComVL, ComWL; ComUH, ComVH, ComWH en fonction d'une position électrique $\theta$ du rotor 8 de la machine 12 de façon que seule l'une des phases u, v, w présentant une force électromotrice entre phases FEM la plus basse soit commutée à la borne de masse 15, comme l'illustrent bien les **Figures 5a et 5b.**

Des plages de commutation des seconds commutateurs de puissance $LS_1$, $LS_2$, $LS_3$ par les premiers signaux ComUL, ComVL, ComWL ne se recouvrant pas, alors que les premiers commutateurs de puissance $HS_1$, $HS_2$, $HS_3$ sont maintenus ouverts par les premiers signaux correspondants ComUH, ComVH, ComWH au niveau zéro en permanence, le stator 10 est en circuit ouvert.

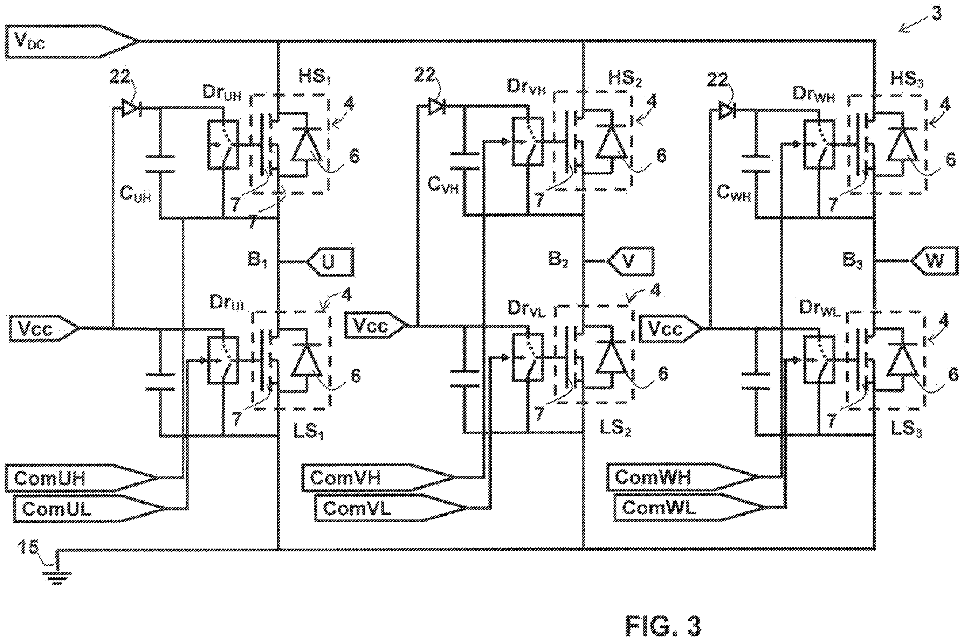

Dans un mode particulier de réalisation de l'onduleur 3 montré sur la **Figure 3,** les premiers et seconds commutateurs de puissance $HS_1$, $HS_2$, $HS_3$, $LS_1$, $LS_2$, $LS_3$ sont contrôlés par des circuits de contrôle $Dr_{UH}$, $Dr_{VH}$, $Dr_{WH}$, $Dr_{UL}$, $Dr_{VL}$, $Dr_{WL}$, alimentés à partir d'une source de tension auxiliaire Vcc.

Les circuits de contrôle $Dr_{UH}$, $Dr_{VH}$, $Dr_{WH}$ des premiers commutateurs de puissance $HS_1$, $HS_2$, $HS_3$ flottants sont alimentés par des capacités de «bootstrap» $C_{UH}$, $C_{VH}$, $C_{WH}$ chargés par des diodes 22 connectées à la source de tension auxiliaire Vcc.

Dans cette configuration, le quatrième sous-programme effectue une charge 23 des capacités de «bootstrap» $C_{UH}$, $C_{VH}$, $C_{WH}$ quand les seconds commutateurs de puissance $LS_1$, $LS_2$, $LS_3$ sont dans un état passant, comme on le comprend bien en se référant à la **Figure 4** (où Vcapa est une tension de charge des capacités de «bootstrap» $C_{UH}$, $C_{VH}$, $C_{WH}$), ces capacités de «bootstrap» $C_{UH}$, $C_{VH}$, $C_{WH}$ étant reliées d'une part à la borne de masse 15, et, d'autre part, à la source de tension auxiliaire Vcc par chacune des diodes 22.

Le procédé de commande selon l'invention décrit ci-dessus pour une machine triphasée 12, s'applique de manière similaire à la machine double triphasée 14 montrée sur la **Figure 6.**

Une machine 14 de ce type est constituée par deux systèmes triphasés qui comprennent deux groupes d'enroulements de phases triphasés u1, v1, w1 ; u2, v2, w2 décalés d'un angle prédéterminé α, le plus souvent de 30°, dans le même stator 10.

Chaque groupe d'enroulements de phases u1, v1, w1 ; u2, v2, w2 est alimenté par l'onduleur 3 piloté par des premiers signaux Com1, Com2 générés par le premier périphérique 16 de l'unité électronique de contrôle 5.

Cette unité électronique de contrôle 5 génère également avec le second périphérique 17 le second signal PWM qui pilote le circuit de commande 9 contrôlant le courant d'excitation rotorique Ir dans le rotor 8.

En fonction de la vitesse de rotation Ω, préalablement à un passage des premiers signaux de commande Com1, Com2 en mode pleine onde, l'unité centrale de traitement 20 de l'unité électronique de contrôle 5 exécute pour chaque système triphasé les troisième et quatrièmes sous-programmes pour assurer une pré-magnétisation du stator 10 en circuit ouvert, et effectuer au besoin la charge des capacités de «bootstrap» $C_{UH}$, $C_{VH}$, $C_{WH}$, si les onduleurs 3 en comportent, et du condensateur de «bootstrap» du circuit de commande 9, si celui-ci est flottant.

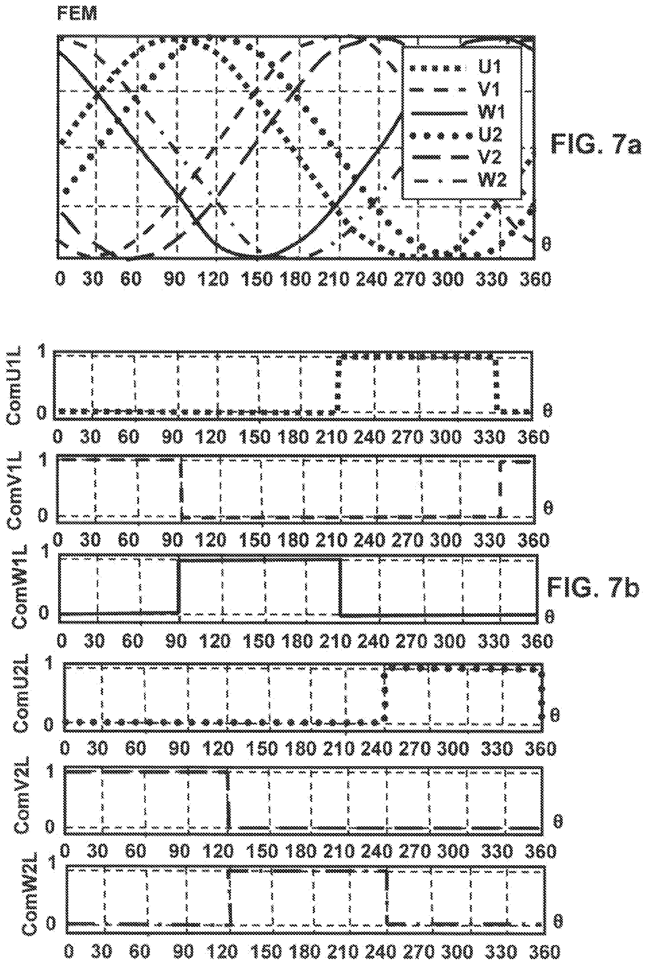

En se référant aux **Figures 7a et 7b,** on comprend bien qu'en adoptant pour piloter les premiers et seconds commutateurs de puissance $HS_1$, $HS_2$, $HS_3$, $LS_1$, $LS_2$, $LS_3$ des deux onduleurs 3 des premiers signaux ComU1L, ComV1L, ComW1L, ComU2L, ComV2L, ComW2L indentiques à ceux pilotant l'onduleur 3 de la machine triphasée, on maintient le stator 10 en circuit ouvert, tout en pouvant au besoin charger les capacités de «bootstrap» $C_{UH}$, $C_{VH}$, $C_{WH}$ des onduleurs 3.

L'unité électronique de contrôle 5 est de préférence réalisée sous la forme d'un microcontrôleur ou d'un microprocesseur dont le firmware comprend des instructions représentatives du procédé selon l'invention.

Le dispositif de commande 11, 13 selon l'invention comprenant l'onduleur 3, ou les deux onduleurs 3, l'unité électronique de contrôle 5, et le circuit de commande 9 est avantageusement intégré sur le palier arrière d'un alterno-démarreur 1, 12, 14 de véhicule automobile.

Il s'agit d'un alterno-démarreur 1, 12, 14 moderne qui communique avec l'unité de contrôle moteur du véhicule via une interface 24 pour un réseau de terrain de type LIN intégrée dans le microcontrôleur ou le microprocesseur 5.

Le pic de courant étant réduit, les éléments de commutation à semi-conducteur 4 n'ont pas besoin d'être surdimensionnés.

L'amélioration est en effet notable: des essais réalisés par l'entité inventive sur un alterno-démarreur standard ont permis de constater qu'une intensité statorique s'élevant à 300 Aeff sans pré-magnétisation était ramenée à 50 Aeff pour une valeur de référence du courant d'excitation rotorique Ir de 2 A lors d'un passage en pleine onde à 4750 tr/mn.

Il en résulte une réduction des coûts qui procure à l'alterno-démarreur 1, 12, 14 selon l'invention un avantage concurrentiel certain.

Comme il va de soi, l'invention ne se limite pas aux seuls modes d'exécution préférentiels décrits ci-dessus.

Les diagrammes de temps des tensions de phases U, V, W; U1,V1,W1; U2,V2,W2 ne sont donnés qu'à titre d'exemple pour une machine triphasée 12 et une machine double triphasée 14; des diagrammes de temps similaires pourraient illustrer une description se rapportant à une machine 1 présentant un plus grand nombre de phases.

La plage de valeurs numériques de la vitesse de rotation nominale est donnée pour un type d'alterno-démarreur 1, 12, 14 déjà commercialisé par la société demanderesse que le procédé et le dispositif selon l'invention ont pour but d'améliorer.

D'autres valeurs numériques seront prédéterminées en fonction des caractéristiques électro-mécaniques d'autres types ou modèles.

L'invention embrasse donc toutes les variantes possibles de réalisation qui resteraient dans le cadre défini par les revendications ci-après.

## Revendications

1. Procédé de commande d'une machine électrique tournante synchrone polyphasée à excitation (1, 12, 14) du type de ceux comprenant une étape de commande dans laquelle on pilote en mode pleine onde (FW) des courants des phases dans des enroulements de phases (u, v, w; u1, v1, w1,u2, v2, w2) d'un stator (10) de ladite machine (1, 12, 14) reliée à un réseau électrique de bord (2, 15) alimenté par une batterie (2) sous une tension nominale prédéterminée (Ubat) pour un fonctionnement en moteur de ladite machine (1, 12, 14), **caractérisé en ce que** ladite étape de commande est précédée d'une étape de pré-magnétisation (PreMag) dudit stator (10) en circuit ouvert dans laquelle une force électromotrice de crête entre phases sensiblement égale à ladite tension nominale (Ubat) est créée par un courant d'excitation rotorique (Ir) d'un rotor (8) de ladite machine (1, 12, 14), ladite étape de pré-magnétisation comprenant une détermination d'une valeur de référence dudit courant d'excitation rotorique (Ir) en fonction d'une pulsation électrique de ladite machine (1, 12, 14).

2. Procédé de commande d'une machine électrique tournante synchrone polyphasée à excitation (1, 12, 14) selon la revendication 1 précédente, **caractérisé en ce que** ladite valeur de référence est donnée par la relation:

$$ \dot{I}_{r,\text{PreMag}} = \frac{1}{K_e}.\left(\frac{V_{DC}}{K.\omega_E} - \phi_0\right) $$

où:

$\omega_E$ est ladite pulsation électrique égale à une vitesse de rotation ($\Omega$) de ladite machine (1, 12, 14) multipliée par un nombre de paires de pôles prédéterminé de ladite machine (1, 12, 14);
$K_e$ est une inductance mutuelle entre ledit rotor (8) et ledit stator (10);
$\Phi_0$ est un flux magnétique rémanent;
$V_{DC}$ est ladite tension nominale (Ubat);
et K vaut $\sqrt{2}/\pi$ .

3. Procédé de commande d'une machine électrique tournante synchrone polyphasée à excitation (1, 12, 14) selon la revendication 2 précédente, **caractérisé en ce que** lesdits courants de phases étant commandés par un onduleur (3) comprenant des bras ($B_1$, $B_2$, $B_3$) formés, d'une part, par des premiers commutateurs de puissance ($HS_1$, $HS_2$, $HS_3$) contrôlés par des circuits de contrôle ($Dr_{UH}$, $Dr_{VH}$, $Dr_{WH}$) alimentés par des capacités de «bootstrap» ($C_{UH}$, $C_{VH}$, $C_{WH}$) et reliant lesdits enroulements de phases (u, v, w; u1, v1, w1,u2, v2, w2) à une borne positive (B+) dudit réseau électrique (2, 15), et d'autre part, par des seconds commutateurs de puissance ($LS_1$, $LS_2$; $LS_3$) reliant lesdits enroulements de phases (u, v, w; u1, v1, w1 ,u2, v2, w2) à une borne de masse (15) dudit réseau électrique (2, 15), ladite étape de pré-magnétisation comprend en outre une séquence de charge (23) desdites capacités de «bootstrap» ($C_{UH}$, $C_{VH}$, $C_{WH}$).

4. Procédé de commande d'une machine électrique tournante synchrone polyphasée à excitation (1, 12, 14) selon la revendication 3 précédente, **caractérisé en ce que** pendant ladite séquence on pilote lesdits seconds commutateurs de puissance ($LS_1$, $LS_2$, $LS_3$) en fonction d'une position électrique ($\theta$) dudit rotor (8) de façon que seule l'une des phases de ladite machine (1, 12, 14) présentant une force électromotrice entre phases (FEM) la plus basse soit commutée à ladite borne de masse (15).

5. Procédé de commande d'une machine électrique tournante synchrone polyphasée à excitation (1, 12, 14) selon la revendication 4 précédente, **caractérisé en ce que** l'on passe de ladite étape de pré-magnétisation (PreMag) à ladite étape de commande lorsque ledit courant d'excitation rotorique (Ir) a atteint ladite valeur de référence et que lesdites capacités de «bootstrap» ($C_{UH}$, $C_{VH}$, $C_{WH}$) sont chargées.

6. Procédé de commande d'une machine électrique tournante synchrone polyphasée à excitation (1, 12, 14) selon l'une quelconque des revendications 1 à 5 précédentes, **caractérisé en ce que** ledit courant d'excitation rotorique (Ir) étant commandé par un élément de commutation contrôlé par un circuit de commande (9) alimenté par un condensateur de «bootstrap», on charge ledit condensateur de «bootstrap» avant ladite étape de pré-magnétisation (PreMag).

7. Dispositif de commande (11, 13) d'une machine électrique tournante synchrone polyphasée à excitation (1, 12, 14) apte à la mise en œuvre du procédé selon l'une quelconque des revendications 1 à 6 précédentes, du type de ceux comportant une unité électronique de contrôle (5) pilotant, d'une part, un onduleur (3) relié à un réseau électrique de bord (2, 15) alimenté par une batterie (2) et destiné à être connecté à des enroulements de phases (u, v, w; u1, v1, w1,u2, v2, w2) d'un stator (10) de ladite machine (1, 12, 14), et d'autre part, un circuit de commande (9) relié audit réseau électrique de bord (2, 15) et destiné à être connecté à un enroulement d'excitation (8) d'un rotor de ladite machine (1, 12, 14), **caractérisé en ce que** ladite unité électronique de contrôle (5) comprend:

- des moyens d'acquisition (18) d'une vitesse de rotation ($\Omega$) de ladite machine (1, 12, 14);

- un premier périphérique de génération (16) de premiers signaux (Com, Com1, Com2) pilotant ledit onduleur (3);

- des moyens de comparaison de ladite vitesse de rotation (Ω) à une vitesse de rotation nominale prédéterminée;

- un second périphérique de génération (17) d'un second signal (PWM) pilotant ledit circuit de commande (9);

- une unité centrale de traitement (20) exécutant, d'une part, un premier sous-programme ou un deuxième sous-programme pour générer au moyen dudit premier périphérique (16) lesdits premiers signaux (Com, Com1, Com2) de manière à produire respectivement des premières tensions de phases modulées en largeur d'impulsion ou des secondes tensions de phases pleine onde (U, V, W) en fonction d'un état desdits moyens de comparaison, et d'autre part, préalablement audit deuxième sous-programme, un troisième sous-programme de détermination d'un courant d'excitation rotorique (Ir) en fonction de ladite vitesse de rotation (Ω) et de génération au moyen dudit second périphérique (17) dudit second signal (PWM) de manière à produire un flux magnétique de pré-magnétisation dans ledit stator (10) et un quatrième sous-programme de génération au moyen dudit premier périphérique (16) desdits premiers signaux (Com, Com1, Com2) de manière à maintenir ledit stator (10) en circuit ouvert.

- des moyens de mémorisation (19) desdits premier, deuxième, troisième et quatrième sous-programmes.

8. Dispositif de commande (12, 13) d'une machine électrique tournante synchrone polyphasée à excitation (1, 12, 14) selon la revendication 7 précédente, **caractérisé en ce que**, ledit onduleur (3) comprenant des bras ($B_1$, $B_2$, $B_3$) formés, d'une part, par des premiers commutateurs de puissance ($HS_1$, $HS_2$, $HS_3$) contrôlés par des circuits de contrôle ($Dr_{UH}$, $Dr_{VH}$, $Dr_{WH}$) alimentés par des capacités de «bootstrap» ($C_{UH}$, $C_{VH}$, $C_{WH}$) et reliant lesdits enroulements de phases (u, v, w; u1, v1, w1,u2, v2, w2) à une borne positive (B+) dudit réseau électrique (2, 15), et d'autre part, par des seconds commutateurs de puissance ($LS_1$, $LS_2$; $LS_3$) reliant lesdits enroulements de phases (u, v, w; u1, v1, w1,u2, v2, w2) à une borne de masse (15) dudit réseau électrique (2, 15), ledit quatrième sous-programme effectue en outre une charge (23) desdites capacités de «bootstrap» ($C_{UH}$, $C_{VH}$, $C_{WH}$).

9. Dispositif de commande (11, 13) d'une machine électrique tournante synchrone polyphasée à excitation (1, 12, 14) selon la revendication 7 précédente, **caractérisé en ce que**, ledit circuit de commande (9) étant alimenté par un condensateur de «bootstrap», ledit troisième sous-programme effectue en outre une charge dudit condensateur de «bootstrap».

10. Alterno-démarreur (1, 12, 14) de véhicule automobile, **caractérisé en ce qu'**il comprend, dans un fonctionnement en mode moteur, un dispositif de commande (11, 13) selon l'une quelconque des revendications 8 à 10 précédentes.

**Patentansprüche**

1. Verfahren zur Steuerung einer angeregten mehrphasigen elektrischen Drehsynchronmaschine (1, 12, 14) vom Typ derjenigen, die einen Steuerschritt beinhalten, wobei Ströme der Phasen in Phasenwicklungen (u, v, w; u1, v1, w1, u2, v2, w2) eines Stators (10) der Maschine (1, 12, 14), die mit einem elektrischen Bordnetz (2, 15), das von einer Batterie (2) mit einer vorgegebenen Nennspannung (Ubat) für einen Motorbetrieb der Maschine (1, 12, 14) mit Strom versorgt wird, verbunden ist, im Vollwellenmodus (FW) angesteuert werden, **dadurch gekennzeichnet, dass** dem Steuerschritt ein Schritt des Vormagnetisierens (PreMag) des Stators (10) bei geöffnetem Kreis vorausgeht, wobei eine elektromotorische Spitzenkraft zwischen Phasen, die im Wesentlichen gleich der Nennspannung (Ubat) ist, durch einen Rotorerregungsstrom (Ir) eines Rotors (8) der Maschine (1, 12, 14) erzeugt wird, wobei der Vormagnetisierungsschritt eine Bestimmung eines Referenzwerts des Rotorerregungsstroms (Ir) in Abhängigkeit von einer elektrischen Kreisfrequenz der Maschine (1, 12, 14) beinhaltet.

2. Verfahren zur Steuerung einer angeregten mehrphasigen elektrischen Drehsynchronmaschine (1, 12, 14) nach dem vorhergehenden Anspruch 1, **dadurch gekennzeichnet, dass** der Referenzwert durch folgende Gleichung gegeben ist:

$$i_{r,PreMag} = \frac{1}{K_e} \cdot \left( \frac{V_{DC}}{K \cdot \omega_E} - \Phi_0 \right)$$

wobei:

$\omega_E$ die elektrische Kreisfrequenz ist, die gleich einer Winkelgeschwindigkeit (Ω) der Maschine (1, 12, 14) multipliziert mit einer vorgegebenen Polpaarzahl der Maschine (1, 12, 14) ist;
$K_e$ eine gegenseitige Induktivität zwischen dem Rotor (8) und dem Stator (10) ist;
$\Phi_0$ ein remanenter magnetischer Fluss ist;
$V_{DC}$ die Nennspannung (Ubat) ist;

$$\frac{\sqrt{2}}{\pi}$$

und K gleich ist.

3. Verfahren zur Steuerung einer angeregten mehrphasigen elektrischen Drehsynchronmaschine (1, 12, 14) nach dem vorhergehenden Anspruch 2, **dadurch gekennzeichnet, dass**, da die Phasenströme durch einen Wechselrichter (3) gesteuert werden, der Arme ($B_1$, $B_2$, $B_3$) beinhaltet, die einerseits durch erste Leistungsschalter ($HS_1$, $HS_2$, $HS_3$), die durch Steuerkreise ($Dr_{UH}$, $Dr_{VH}$, $Dr_{WH}$), die von "Bootstrap"-Kondensatoren ($C_{UH}$, $C_{VH}$, $C_{WH}$) mit Strom versorgt werden, gesteuert werden und die Phasenwicklungen (u, v, w; u1, v1, w1, u2, v2, w2) mit einem positiven Anschluss (B+) des elektrischen Netzes (2, 15) verbinden, und andererseits durch zweite Leistungsschalter ($LS_1$, $LS_2$; $LS_3$), die die Phasenwicklungen (u, v, w; u1, v1, w1, u2, v2, w2) mit einem Masseanschluss (15) des elektrischen Netzes (2, 15) verbinden, gebildet sind, der Vormagnetisierungsschritt ferner eine Sequenz des Ladens (23) der "Bootstrap"-Kondensatoren ($C_{UH}$, $C_{VH}$, $C_{WH}$) beinhaltet.

4. Verfahren zur Steuerung einer angeregten mehrphasigen elektrischen Drehsynchronmaschine (1, 12, 14) nach dem vorhergehenden Anspruch 3, **dadurch gekennzeichnet, dass** die zweiten Leistungsschalter ($LS_1$, $LS_2$, $LS_3$) während der Sequenz in Abhängigkeit von einer elektrischen Stellung (θ) des Rotors (8) so angesteuert werden, dass nur eine der Phasen der Maschine (1, 12, 14), die eine niedrigste elektromotorische Kraft zwischen Phasen (FEM) aufweist, auf den Masseanschluss (15) geschaltet wird.

5. Verfahren zur Steuerung einer angeregten mehrphasigen elektrischen Drehsynchronmaschine (1, 12, 14) nach dem vorhergehenden Anspruch 4, **dadurch gekennzeichnet, dass** von dem Vormagnetisierungsschritt (PreMag) zu dem Steuerschritt übergegangen wird, wenn der Rotorerregungsstrom (Ir) den Referenzwert erreicht hat und die "Bootstrap"-Kondensatoren ($C_{UH}$, $C_{VH}$, $C_{WH}$) geladen sind.

6. Verfahren zur Steuerung einer angeregten mehrphasigen elektrischen Drehsynchronmaschine (1, 12, 14) nach einem der vorhergehenden Ansprüche 1 bis 5, **dadurch gekennzeichnet, dass**, da der Rotorerregungsstrom (Ir) durch ein Schaltelement gesteuert wird, das durch einen Steuerkreis (9) gesteuert wird, der von einem "Bootstrap"-Kondensator mit Strom versorgt wird, der "Bootstrap"- Kondensator vor dem Vormagnetisierungsschritt (PreMag) geladen wird.

7. Vorrichtung zur Steuerung (11, 13) einer angeregten mehrphasigen elektrischen Drehsynchronmaschine (1, 12, 14), die dazu fähig ist, das Verfahren nach einem der vorhergehenden Ansprüche 1 bis 6 umzusetzen, vom Typ derjenigen, die eine elektronische Steuereinheit (5) umfassen, die einerseits einen Wechselrichter (3), der mit einem elektrischen Bordnetz (2, 15), das von einer Batterie (2) mit Strom versorgt wird, verbunden ist und dazu bestimmt ist, an Phasenwicklungen (u, v, w; u1, v1, w1, u2, v2, w2) eines Stators (10) der Maschine (1, 12, 14) angeschlossen zu sein, und andererseits einen Steuerkreis (9), der mit dem elektrischen Bordnetz (2, 15) verbunden ist und dazu bestimmt ist, an eine Erregungswicklung (8) eines Rotors der Maschine (1, 12, 14) angeschlossen zu sein, ansteuert, **dadurch gekennzeichnet, dass** die elektronische Steuereinheit (5) Folgendes beinhaltet:

   - Mittel zum Erfassen (18) einer Winkelgeschwindigkeit (Ω) der Maschine (1, 12, 14);
   - ein erstes Peripheriegerät zur Erzeugung (16) erster Signale (Com, Com1, Com2), die den Wechselrichter (3) ansteuern;
   - Mittel zum Vergleichen der Winkelgeschwindigkeit (Ω) mit einer vorgegebenen Nennwinkelgeschwindigkeit;
   - ein zweites Peripheriegerät zur Erzeugung (17) eines zweiten Signals (PWM), das den Steuerkreis (9) ansteuert;
   - eine zentrale Verarbeitungseinheit (20), die Folgendes ausführt: einerseits ein erstes Unterprogramm oder ein zweites Unterprogramm, um mit Hilfe des ersten Peripheriegeräts (16) die ersten Signale (Com, Com1, Com2) zu erzeugen, um jeweils erste pulsbreitenmodulierte Phasenspannungen oder zweite Vollwellenphasenspannungen (U, V, W) in Abhängigkeit von einem Zustand der Vergleichsmittel zu produzieren, und andererseits vor dem zweiten Unterprogramm ein drittes Unterprogramm zur Bestimmung eines Rotorerregungsstroms (Ir) in Abhängigkeit von der Winkelgeschwindigkeit (Ω) und zur Erzeugung, mit Hilfe des zweiten Peripheriegeräts (17), des zweiten Signals (PWM), um einen magnetischen Vormagnetisierungsfluss in dem Stator (10) zu produzieren, und ein viertes Unterprogramm zur Erzeugung, mit Hilfe des ersten Peripheriegeräts (16), der ersten Signale (Com, Com1, Com2), um den Kreis des Stators (10) geöffnet zu halten;
   - Mittel zum Speichern (19) des ersten, zweiten, dritten und vierten Unterprogramms.

8. Vorrichtung zur Steuerung (12, 13) einer angeregten mehrphasigen elektrischen Drehsynchronmaschine (1, 12, 14) nach dem vorhergehenden Anspruch 7, **dadurch gekennzeichnet, dass**, da der Wechsel-

richter (3) Arme (B$_1$, B$_2$, B$_3$) beinhaltet, die einerseits durch erste Leistungsschalter (HS$_1$, HS$_2$, HS$_3$), die durch Steuerkreise (Dr$_{UH}$, Dr$_{VH}$, Dr$_{WH}$), die von "Bootstrap"-Kondensatoren (C$_{UH}$, C$_{VH}$, C$_{WH}$) mit Strom versorgt werden, gesteuert werden und die Phasenwicklungen (u, v, w; u1, v1, w1, u2, v2, w2) mit einem positiven Anschluss (B+) des elektrischen Netzes (2, 15) verbinden, und andererseits durch zweite Leistungsschalter (LS$_1$, LS$_2$; LS$_3$), die die Phasenwicklungen (u, v, w; u1, v1, w1, u2, v2, w2) mit einem Masseanschluss (15) des elektrischen Netzes (2, 15) verbinden, gebildet sind, das vierte Unterprogramm ferner ein Laden (23) der "Bootstrap"-Kondensatoren (C$_{UH}$, C$_{VH}$, C$_{WH}$) durchführt.

9. Vorrichtung zur Steuerung (11, 13) einer angeregten mehrphasigen elektrischen Drehsynchronmaschine (1, 12, 14) nach dem vorhergehenden Anspruch 7, **dadurch gekennzeichnet, dass**, da der Steuerkreis (9) von einem "Bootstrap"-Kondensator mit Strom versorgt wird, das dritte Unterprogramm ferner ein Laden des "Bootstrap"-Kondensators durchführt.

10. Starter-Generator (1, 12, 14) eines Kraftfahrzeugs, **dadurch gekennzeichnet, dass** er in einem Betrieb im Motormodus eine Vorrichtung zur Steuerung (11, 13) nach einem der vorhergehenden Ansprüche 8 bis 10 beinhaltet.

**Claims**

1. Method for controlling an excitation polyphase synchronous rotating electric machine (1, 12, 14) of the type comprising a control step in which currents of the phases in phase windings (u, v, w; u1, v1, w1, u2, v2, w2) of a stator (10) of said machine (1, 12, 14) are driven in full-wave (FW) mode, said machine being connected to an on-board electrical network (2, 15) supplied with power by a battery (2) under a predetermined nominal voltage (Ubat) for motor operation of said machine (1, 12, 14), **characterized in that** said control step is preceded by a step (PreMag) of premagnetizing said stator (10) in an open circuit, in which step a peak electromotive force between phases that is substantially equal to said nominal voltage (Ubat) is created by a rotor excitation current (Ir) for a rotor (8) of said machine (1, 12, 14), said premagnetization step comprising determining a reference value of said rotor excitation current (Ir) according to an electrical angular frequency of said machine (1, 12, 14).

2. Method for controlling an excitation polyphase synchronous rotating electric machine (1, 12, 14) according to the preceding Claim 1, **characterized in that** said reference value is given by the relationship:

$$i_{r,PreMag} = \frac{1}{K_e} \cdot \left( \frac{V_{DC}}{K \cdot \omega_E} - \phi_0 \right)$$

where:

$\omega_E$ is said electrical angular frequency, which is equal to a rotational speed ($\Omega$) of said machine (1, 12, 14) multiplied by a predetermined number of pairs of poles of said machine (1, 12, 14);
$K_e$ is a mutual inductance between said rotor (8) and said stator (10);
$\Phi_0$ is a residual magnetic flux;
$V_{DC}$ is said nominal voltage (Ubat);
and K equals $\sqrt{2}/\pi$ .

3. Method for controlling an excitation polyphase synchronous rotating electric machine (1, 12, 14) according to the preceding Claim 2, **characterized in that**, with said phase currents being controlled by an inverter (3) comprising branches (B$_1$, B$_2$, B$_3$) that are formed, on the one hand, by first power switches (HS$_1$, HS$_2$, HS$_3$) that are controlled by control circuits (Dr$_{UH}$, Dr$_{VH}$, Dr$_{WH}$) that are supplied with power by bootstrap capacitors (C$_{UH}$, C$_{VH}$, C$_{WH}$) and connecting said phase windings (u, v, w; u1, v1, w1, u2, v2, w2) to a positive terminal (B+) of said electrical network (2, 15) and, on the other hand, by second power switches (LS$_1$, LS$_2$; LS$_3$) connecting said phase windings (u, v, w; u1, v1, w1, u2, v2, w2) to a ground terminal (15) of said electrical network (2, 15), said premagnetization step further comprises a sequence (23) of charging said bootstrap capacitors (C$_{UH}$, C$_{VH}$, C$_{WH}$) .

4. Method for controlling an excitation polyphase synchronous rotating electric machine (1, 12, 14) according to the preceding Claim 3, **characterized in that**, during said sequence, said second power switches (LS$_1$, LS$_2$, LS$_3$) are driven according to an electrical position ($\theta$) of said rotor (8) so that only one of the phases of said machine (1, 12, 14), having the lowest electromotive force (emf) between phases, is switched to said ground terminal (15).

5. Method for controlling an excitation polyphase synchronous rotating electric machine (1, 12, 14) according to the preceding Claim 4, **characterized in that** there is a transition from said premagnetization step (PreMag) to said control step when said rotor excitation current (Ir) has reached said reference value and said bootstrap capacitors (C$_{UH}$, C$_{VH}$, C$_{WH}$) are charged.

**6.** Method for controlling an excitation polyphase synchronous rotating electric machine (1, 12, 14) according to any one of the preceding Claims 1 to 5, **characterized in that**, with said rotor excitation current (Ir) being controlled by a switching element controlled by a control circuit (9) supplied with power by a bootstrap capacitor, said bootstrap capacitor is charged before said premagnetization step (PreMag).

**7.** Device (11, 13) for controlling an excitation polyphase synchronous rotating electric machine (1, 12, 14) able to implement the method according to any one of the preceding Claims 1 to 6, of the type comprising an electronic control unit (5) driving, on the one hand, an inverter (3) connected to an on-board electrical network (2, 15) supplied with power by a battery (2) and intended to be connected to phase windings (u, v, w; u1, v1, w1, u2, v2, w2) of a stator (10) of said machine (1, 12, 14) and, on the other hand, a control circuit (9) connected to said on-board electrical network (2, 15) and intended to be connected to an excitation winding (8) for a rotor of said machine (1, 12, 14), **characterized in that** said electronic control unit (5) comprises:

- means (18) for acquiring a rotational speed ($\Omega$) of said machine (1, 12, 14);
- a first peripheral (16) for generating first signals (Com, Com1, Com2) driving said inverter (3) ;
- means for comparing said rotational speed ($\Omega$) with a predetermined nominal rotational speed;
- a second peripheral (17) for generating a second signal (PWM) driving said control circuit (9);
- a central processing unit (20) executing, on the one hand, a first subroutine or a second subroutine in order to generate said first signals (Com, Com1, Com2) by means of said first peripheral (16) so as to produce first, pulse-width modulated phase voltages or second, full-wave phase voltages (U, V, W), respectively, according to a state of said comparison means and, on the other hand, prior to said second subroutine, a third subroutine for determining a rotor excitation current (Ir) according to said rotational speed ($\Omega$) and for generating said second signal (PWM) by means of said second peripheral (17) so as to produce a premagnetization magnetic flux in said stator (10) and a fourth subroutine for generating said first signals (Com, Com1, Com2) by means of said first peripheral (16) so as to keep said stator (10) in an open circuit.
- means (19) for storing said first, second, third and fourth subroutines.

**8.** Device (12, 13) for controlling an excitation polyphase synchronous rotating electric machine (1, 12, 14) according to the preceding Claim 7, **characterized in that**, with said inverter (3) comprising branches ($B_1$, $B_2$, $B_3$) that are formed, on the one hand, by first power switches ($HS_1$, $HS_2$, $HS_3$) that are controlled by control circuits ($Dr_{UH}$, $Dr_{VH}$, $Dr_{WH}$) that are supplied with power by bootstrap capacitors ($C_{UH}$, $C_{VH}$, $C_{WH}$) and connecting said phase windings (u, v, w; u1, v1, w1, u2, v2, w2) to a positive terminal (B+) of said electrical network (2, 15) and, on the other hand, by second power switches ($LS_1$, $LS_2$; $LS_3$) connecting said phase windings (u, v, w; u1, v1, w1, u2, v2, w2) to a ground terminal (15) of said electrical network (2, 15), said fourth subroutine further charges (23) said bootstrap capacitors ($C_{UH}$, $C_{VH}$, $C_{WH}$) .

**9.** Device (11, 13) for controlling an excitation polyphase synchronous rotating electric machine (1, 12, 14) according to the preceding Claim 7, **characterized in that**, with said control circuit (9) being supplied with power by a bootstrap capacitor, said third subroutine further charges said bootstrap capacitor.

**10.** Motor vehicle alternator-starter (1, 12, 14), **characterized in that** it comprises, in motor-mode operation, a control device (11, 13) according to any one of the preceding Claims 8 to 10.

Fig. 1

FIG. 2

EP 3 369 168 B1

FIG. 3

FIG. 4

FEM

FIG. 5a

FIG. 5b

FIG. 6

EP 3 369 168 B1

FIG. 7a

FIG. 7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2745445
- FR 2895597
- WO 2006097789 A2
- US 2010207568 A1
- US 2012298062 A